# EUROPEAN PATENT APPLICATION

(11) **EP 4 389 330 A1**
(43) Date of publication of application: **26.06.2024**
(21) Application number: 23215927.7
(22) Date of filing: 12.12.2023
(51) Int. Cl.: B23B 31/20

(54) **QUICK-CHANGE COLLET**

(30) Priority: 20.12.2022 US 202263476208 P; 07.06.2023 US 202363506775 P
(71) Applicant: Techtronic Cordless GP, Anderson, SC 29621 (US)
(72) Inventor: LOFTIS, Jonathan C., Anderson, 29621 (US); O'SHIELDS, Steven T., Anderson, 29621 (US); HU, Long Long, Dongguan City (CN); LIU, Fu, Dongguan City (CN); LIAO, Jia Ming, Dongguan City (CN)
(74) Representative: Parker, Andrew James

(57) **Abstract**

A collet (10) for a tool including an outer nut (18) having a grip and defining a collet bore configured to receive a chuck (26). The collet bore includes a collet engagement surface engageable with the chuck to selectively secure a tool accessory. The collet also includes a spring (30) having an extension portion engageable with an external part of an output shaft of the tool or an internal part of the outer nut to provide feedback to a user regarding securement of the collet.

## Description

### CROSS-REFERENCE TO RELATED APPLICATIONS

This application claims priority to U.S Provisional Patent Application No. 63/476,208, filed on December 20, 2022, and U.S. Provisional Patent Application No. 63/506,775, filed on June 7, 2023. The entire contents of each of the above-identified disclosures are incorporated herein by reference.

### FIELD

The present application relates to a collet, and more particularly, a quick-change collet providing a tactile and audible feedback.

### BACKGROUND

A collet retains a cutting implement in a clamped arrangement with the output shaft of a tool such as an end mill, a drill press, a rotary tool bit, or other cutting tool. Machining operations often require the use of different cutting implements to cut different profiles in a workpiece and the cutting implements need to be changed to achieve those different cutting profiles. A typical collet does not provide feedback to the user that a tool is being clamped within the collet as the collet is tightened.

### SUMMARY

The present disclosure provides, in one aspect, a collet for a tool including an outer nut having a grip and defining a collet bore configured to receive a chuck. The collet bore includes a collet engagement surface engageable with the chuck to selectively secure a tool accessory. The collet also includes a spring having an extension portion engageable with an external part of an output shaft of the tool or an internal part of the outer nut to provide feedback to a user regarding securement of the collet.

The present disclosure provides, in another aspect, a tool including an output shaft coupled to the tool and having a threaded portion and a groove disposed in the output shaft, an inner chuck, and a collet selectively engageable with the output shaft. The collet includes an outer nut defining a collet bore configured to receive the inner chuck and having a collet engagement surface engageable with an end of the inner chuck to selectively secure a tool accessory to the output shaft, and a spring coupled to the outer nut and including an extension portion configured to engage the groove to provide feedback to a user regarding securement of the tool accessory on the output shaft.

The present disclosure provides, in another aspect, a collet configured to couple to an output shaft of a tool. The collet includes an outer nut configured to engage the output shaft and defining apertures arranged annularly on the outer nut, the outer nut configured to selectively secure a tool accessory to the output shaft. The collet also includes a spring coupled to the outer nut and including extension portions, a first extension portion of the extension portions extending through a first aperture of the apertures and a second extension portion of the extension portions extending through a second aperture of the apertures to secure the spring to the outer nut for co-rotation, wherein each of the extension portions is configured to engage an external part of the output shaft.

Other aspects of the disclosure will become apparent by consideration of the detailed description and accompanying drawings.

### BRIEF DESCRIPTION OF THE DRAWINGS

FIG. 1 is a perspective view of a quick-change collet.
FIG. 2 is an exploded view of the collet of FIG. 1.
FIG. 3 is a perspective view of the outer nut of the collet of FIG. 1.
FIG. 4 is a perspective view of the spring of the collet of FIG. 1.
FIG. 5 is a section view of the collet of FIG. 1.
FIG. 6 is an enlarged section view of the collet of FIG. 1, illustrating the outer nut and spring.
FIG. 7 is a perspective view of another embodiment of a collet.
FIG. 8 is an exploded view of the collet of FIG. 7.
FIG. 9 is a perspective view of the outer nut of the collet of FIG. 7.
FIG. 10 is a perspective view of the inner chuck of the collet of FIG. 7.
FIG. 11 is a perspective view of the spring of the collet of FIG. 7.
FIG. 12 is a perspective view of the chuck holder of the collet of FIG. 7.
FIG. 13 is a section view of the collet of FIG. 7.
FIG. 14 is a section view of the collet of FIG. 7 illustrating the outer nut, inner chuck, and spring.
FIG. 15 is a section view of the collet of FIG. 7 illustrating the output shaft, the chuck holder, retainer clip, and spring.
FIG. 16 is a perspective view of another embodiment of a collet.
FIG. 17 is an exploded view of the collet of FIG. 16.
FIG. 18 is a section view of an outer nut of the collet of FIG. 16.
FIG. 19 is a section view of the inner nut of the collet of FIG. 16.
FIG. 20 is a section view of the outer nut assembly of the collet of FIG. 16.
FIG. 21 is a section view of the collet of FIG. 16.
FIG. 22 is a perspective view of another embodiment of a quick-change collet including an outer nut and an output shaft to which the outer nut is coupled.
FIG. 23 is an exploded perspective view of the collet of FIG. 22.
FIG. 24 is a perspective view of a portion of the output shaft.
FIG. 25 is a section view of the collet and the output shaft of FIG. 22.
FIG. 26 is a rear perspective view of an outer nut of the collet of FIG. 22.
FIG. 27 is a perspective view of a spring of the collet of FIG. 22.
FIG. 28 is a perspective view of another embodiment of a spring of the collet of FIG. 22.
FIG. 29 is a perspective view of an outer nut of the collet of FIG. 22.
FIG. 30 is a rear cross-section view of the collet of FIG. 22.
FIG. 31 is a perspective view of another exemplary quick-change collet including an outer nut.
FIG. 32 is a perspective view of another embodiment of a quick-change collet.
FIG. 33 is an exploded perspective view of the collet of FIG. 32.
FIG. 34 is a front view of the collet of FIG. 32.
FIG. 35 is a cross sectional view of the collet of FIG. 32 through line 35-35 of FIG. 34.
FIG. 36 is a rear perspective view of an outer nut of the collet of FIG. 32.
FIG. 37 is a top perspective view of an insert of the collet of FIG. 32.
FIG. 38 is a perspective view of a spring of the collet of FIG. 32.
FIG. 39 is a rear perspective view of the collet of FIG. 32.
FIG. 40 is a rear view of the collet of FIG. 32.
FIG. 41 is a top perspective view of another embodiment of an insert.
FIG. 42 is a top perspective view of another embodiment of an insert.
FIG. 43 a top perspective view of another embodiment of an insert.
FIG. 44 is a cross sectional view of the collet of FIG. 32 including the insert of FIG. 43.

### DETAILED DESCRIPTION

Before any embodiments of the subject matter are explained in detail, it is to be understood that the subject matter is not limited in its application to the details of construction and the arrangement of components set forth in the following description or illustrated in the following drawings. The subject matter is capable of other embodiments and of being practiced or of being carried out in various ways.

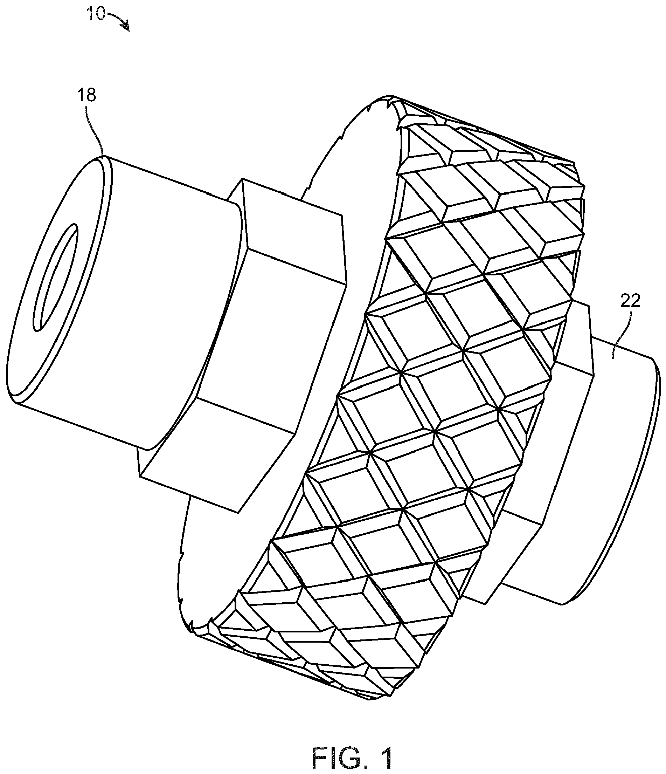

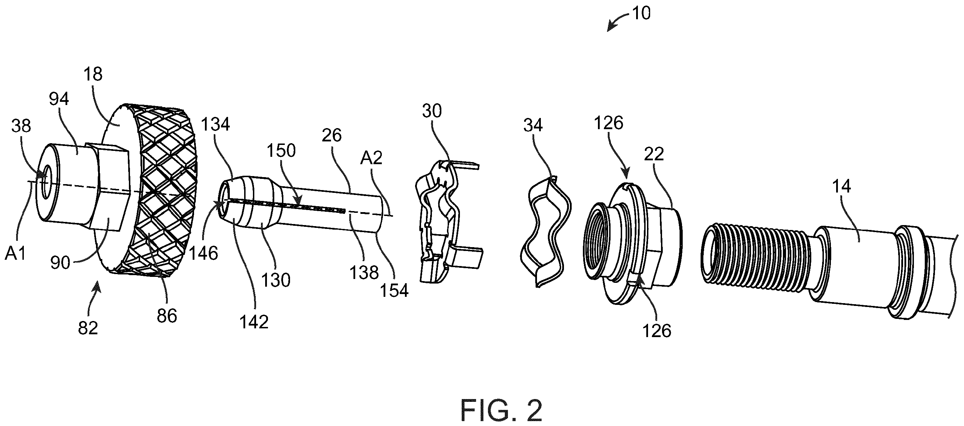

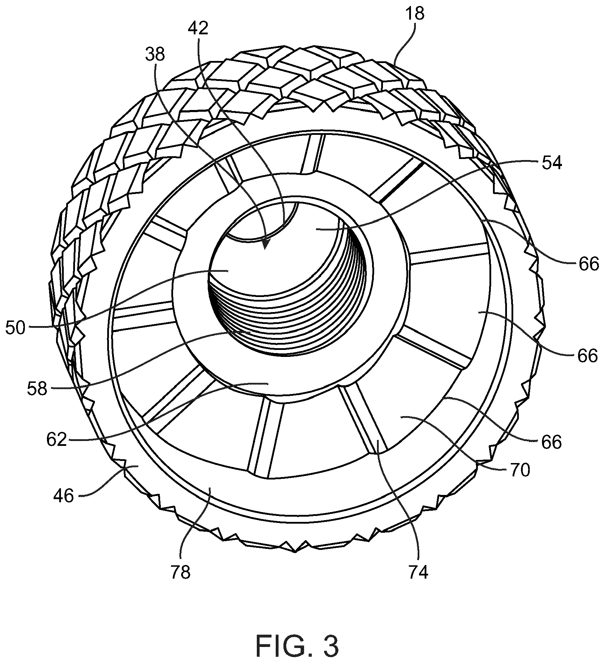

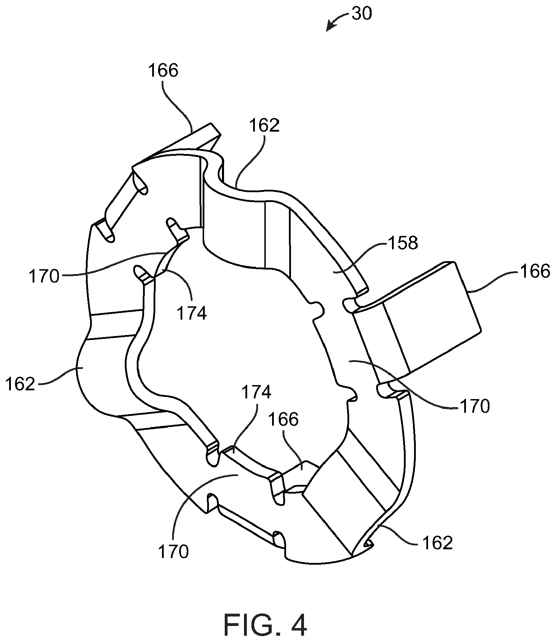

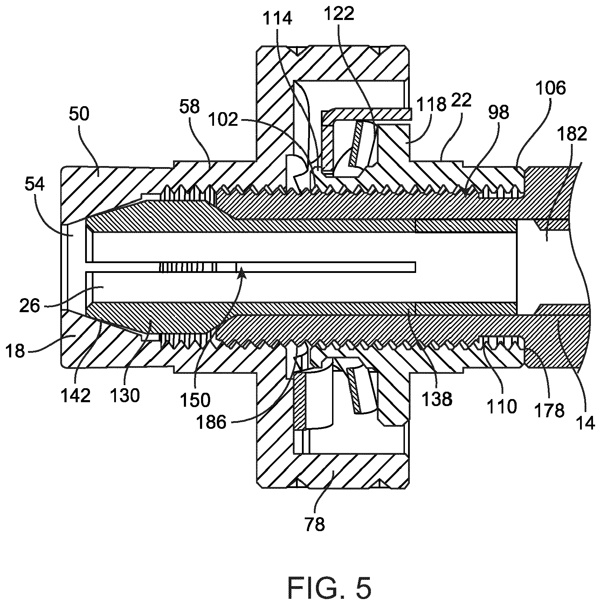

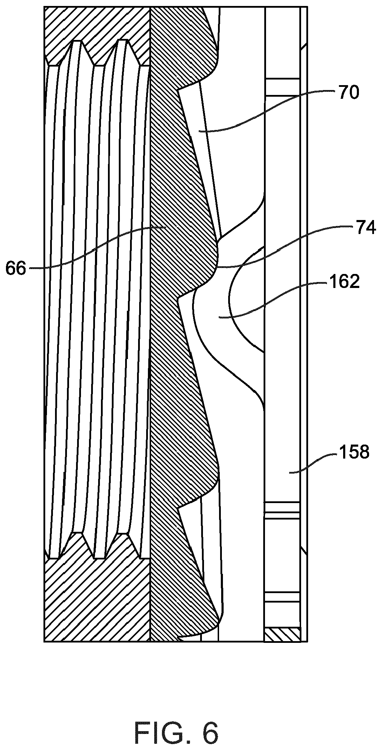

FIGS. 1-6 illustrate an exemplary quick-change collet 10 according to the disclosure (referred to in the description as "collet 10") that may be attached to a tool (e.g., an end mill, a drill press, etc.) to provide rotational output to an implement (e.g., a cutting or boring implement) while having a reduced weight, a simplified structure and reduced costs relative to existing quick-change collets.

The collet 10 includes an outer nut 18, a spring holder 22, an inner chuck 26, a first spring 30, and a second spring 34. In some embodiments, the first spring 30 may be a stamp spring and the second spring 34 may be a wave spring. The outer nut 18 defines a collet bore 38 that extends axially through the outer nut 18 along an axis A1 between a first end 42 (e.g., to which a cutting implement may be coupled) and a second end 46. The collet bore 38 includes an engagement portion 50 that defines an engagement surface 54 with a tapered or semispherical profile adjacent the first end 42. The engagement portion 50 defines a portion of the collet bore 38. The collet bore 38 also includes a threaded portion 58 that extends axially from the engagement surface 54 toward the second end 46. The threaded portion 58 defines a portion of the collet bore 38. An inner face 62 extends radially from the threaded portion 58 opposite the engagement surface 54 and has a plurality of ramps 66 that extend circumferentially around the collet bore 38. As shown, each of the ramps 66 has an incline surface 70 terminating at an edge 74 that is offset from an adjacent ramp 66 in the axial direction. The second end 46 of the outer nut 18 defines a receiver portion 78 that has an inner diameter greater than the diameter of the collet bore 38. It will be appreciated that the outer nut 18 may have engagement structures 82 (e.g., knurls or another textured surface) that facilitate easier gripping and turning of the outer nut 18. As shown in FIG. 1, the illustrated embodiment further optionally includes a hex 90 defined on the outer surface 94 of the threaded portion 58 that is engageable by a tool (e.g., a box wrench) to apply a larger amount of torque to the outer nut 18 than would be possible by finger-tightening the outer nut 18.

The spring holder 22 includes a bore 98 extending axially through the spring holder 22 from a first end 102 to a second end 106 of the spring holder 22 and including threading 110 along the length of the bore 98. A lip 114 extends radially outward and circumferentially about the first end 102 of the spring holder 22 and a stopper portion 118 extends radially outward from the spring holder 22 between the first and second ends 102, 106. The stopper portion 118 defines a surface 122 extending substantially perpendicular to the bore 98 of the spring holder 22. The stopper portion 118 includes a plurality of alignment recesses 126 spaced equidistantly about the circumference of the stopper portion 118. The spring holder 22 includes a rotational structure (e.g., a hex profile) adjacent the stopper portion 118 engageable by a tool (e.g., a box wrench) to apply a torque to the spring holder 22.

The inner chuck 26 includes an engagement portion 130 at a first end 134 of the inner chuck 26 and an insertion portion 138 with a substantially cylindrical profile that extends from the engagement portion 130. The engagement portion 130 has an outer surface 142 that defines a tapered or semispherical profile. A chuck bore 146 extends along axis A2 through the inner chuck 26 and receives a cutting implement. A plurality of slits 150 extend axially from the first end 134 and terminate between the first end 134 and the opposite second end 154.

The first spring 30 includes an annular ring portion 158 that defines a plurality of ridges 162 (e.g., three ridges). The ridges 162 may also be referred to as extension portions. A plurality of alignment tabs 166 extend substantially perpendicular to the ring portion 158 in a direction opposite the ridges 162. A plurality of retainer tabs 170 extend radially inward from the ring portion 158. The retainer tabs 170 have a curved surface 174 with a diameter that is smaller than the inner diameter of the ring portion 158.

The collet 10 is assembled by attaching the second spring 34 to the first end 102 of the spring holder 22. The first spring 30 is then coupled to the first end 102 of the spring holder 22 with the alignment tabs 166 disposed or located in the alignment recesses 126. As the first spring 30 is attached to the spring holder 22, the retainer tabs 170 engage and are elastically deformed by the lip 114 of the spring holder 22 when the first spring 30 passes the lip 114. The lip 114 retains the first spring 30 on the spring holder 22. The second spring 34 engages the first spring 30 and biases the first spring 30 toward the first end 102 of the spring holder 22. The spring holder 22, first spring 30, and second spring 34 are then threadedly coupled to the output shaft 14 via the threading 110 of the spring holder 22, with the spring holder 22 engaging a shoulder 178 of the output shaft 14. The inner chuck 26 is inserted into the output shaft 14, with the insertion portion 138 received in the output shaft bore 182.

The outer nut 18 is coupled to the output shaft 14 via threaded engagement of the outer nut 18 with external threading 186 of the output shaft 14. The engagement surface 54 of the outer nut 18 engages the outer surface 142 of the inner chuck 26 and elastically deforms the inner chuck 26 via the slits 150 inward toward and into clamping engagement with a cutting implement inserted into the inner chuck 26. As the outer nut 18 is tightened onto the output shaft 14, the ramps 66 are brought into engagement with the ridges 162 of the first spring 30. As the outer nut 18 continues to be tightened, the incline surface 70 of the ramps 66 engage the ridges 162 and progressively biases the first spring 30 against the second spring 34. As the ridges 162 approach and pass the edge 74 of the ramp 66, tactile and audible feedback is provided to the user to indicate completion of at least a partial rotation of the outer nut 18. Engagement of the second spring 34 with the first spring 30 and resulting elastic deformation of the second spring 34 reduces the likelihood of deformation (e.g., flattening) of the ridges 162.

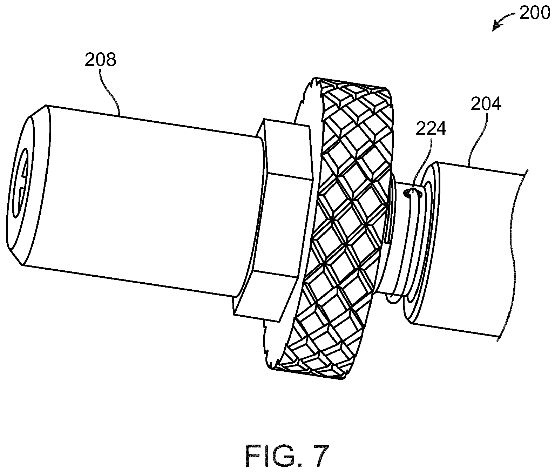

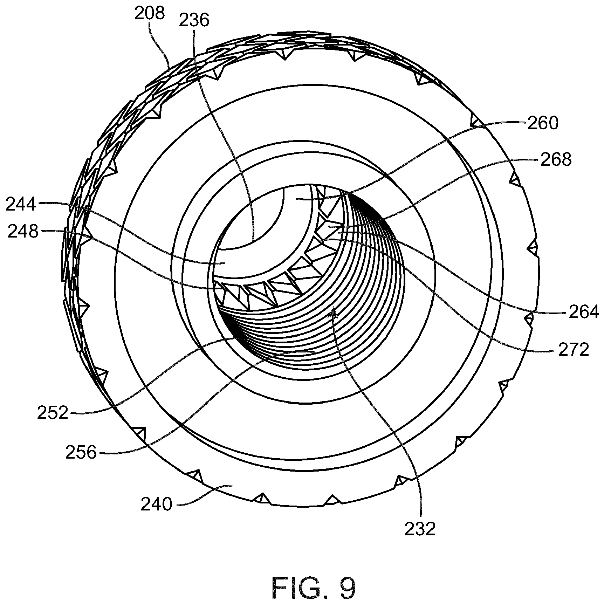

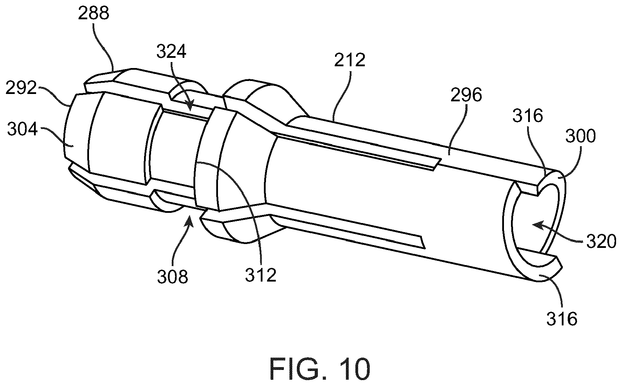

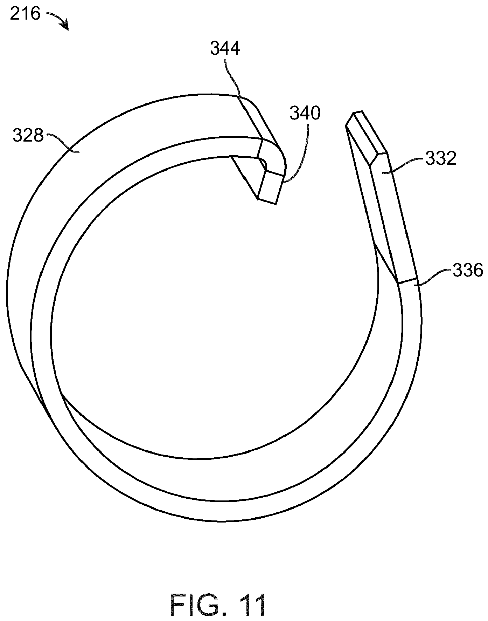

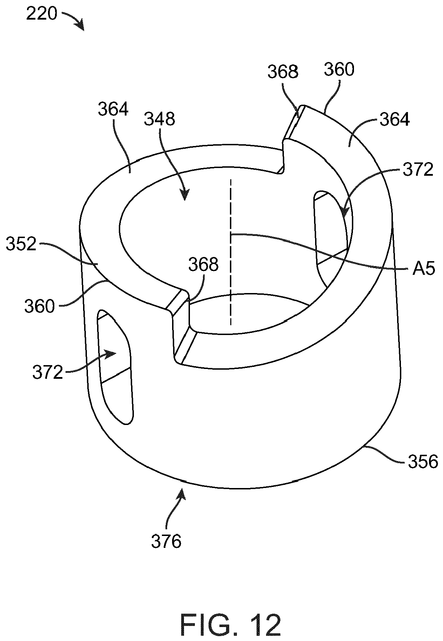

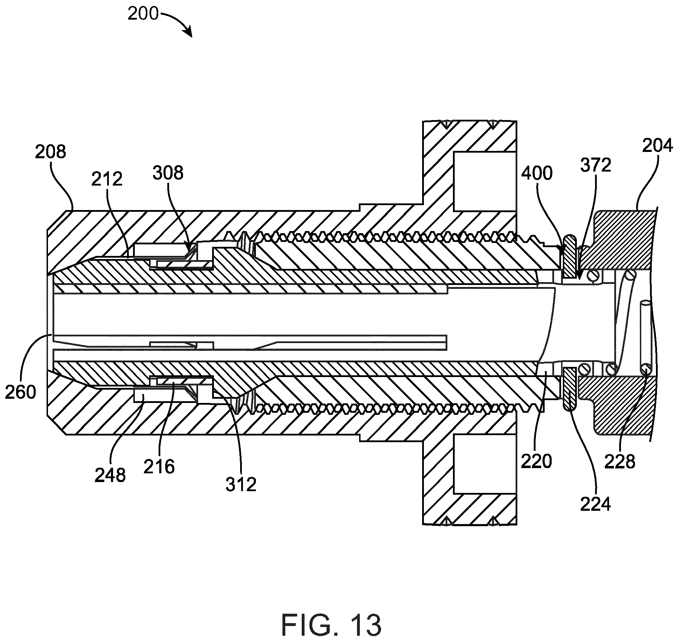

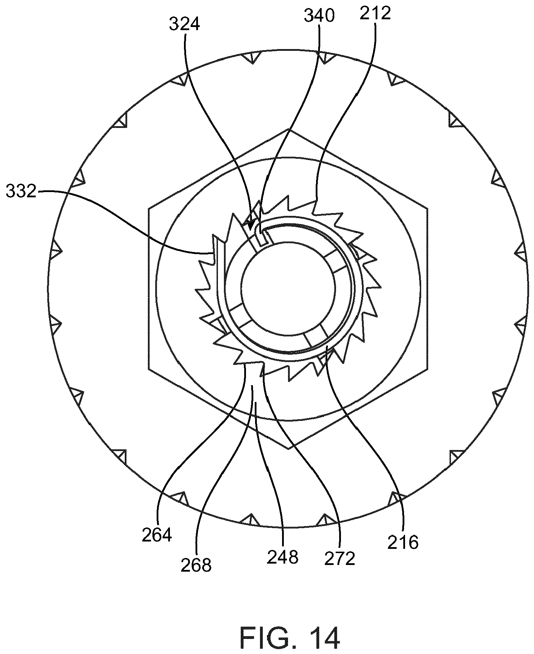

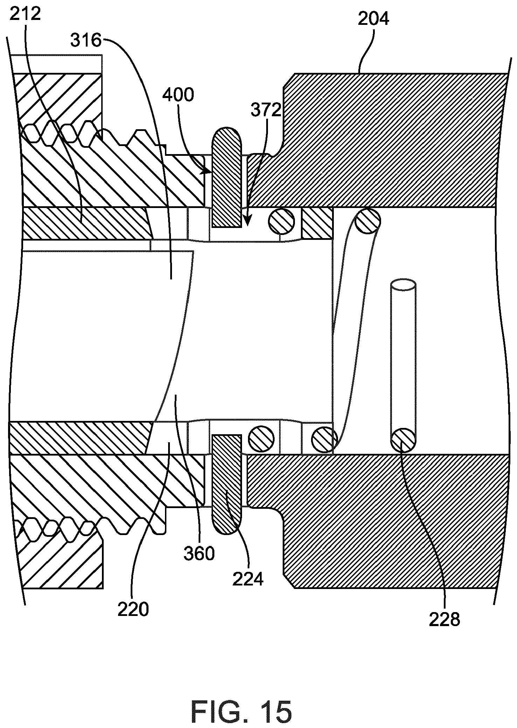

FIGS. 7-15 illustrate another exemplary quick-change collet 200 according to the disclosure (hereinafter referred to as "collet 200") that may be attached to a tool (e.g., an end mill, drill press, etc.) to provide a rotational output to an implement (e.g., a cutting or boring implement). The collet 200 includes an outer nut 208, an inner chuck 212, a first spring 216, a chuck holder 220, a retainer clip 224, and a second spring 228.

The outer nut 208 defines a collet bore 232 that extends along an axis A3 through the outer nut 208 from a first end 236 (e.g., to which a cutting implement may be coupled) to a second end 240. The collet bore 232 defines an engagement portion 244 at the first end 236, a tooth portion 248 adjacent the engagement portion 244, and a threaded portion 252 that extends from the tooth portion 248 to the second end 240 and includes internal threads 256. The engagement portion 244, the tooth portion 248, and the threaded portion 252 each define a portion of the collet bore 232. The engagement portion 244 defines a surface 260 with an angled profile. The tooth portion 248 defines a plurality of teeth 264 spaced circumferentially about the collet bore 232. Each tooth 264 defines an incline portion 268 that extends inwardly into the collet bore 232 and terminates at an edge 272 that is substantially parallel to the axis A3 of the collet bore 232. The edge 272 is radially offset from the incline portion 268 of an adjacent tooth 264. It will be appreciated that the outer nut 208 may have engagement structures 276 (e.g., knurls or another textured surface) that facilitate easier gripping and turning of the outer nut 208. As shown in FIG. 7, the illustrated embodiment further optionally includes a hex 280 defined on the outer surface 284 that is engageable by a tool (e.g., a box wrench) to apply a larger amount of torque to the outer nut 208 than would be possible by finger-tightening the outer nut 208.

The inner chuck 212 defines an engagement portion 288 at a first end 292 of the inner chuck 212 and an insertion portion 296 with a substantially cylindrical profile that extends from the engagement portion 288 to a second end 300 of the inner chuck 212. The engagement portion 288 includes an engagement surface 304 that extends from the first end 292 and that has a tapered or semispherical profile. The engagement portion 288 has a recess 308 that extends circumferentially around the inner chuck 212 between the engagement surface 304 and the second end 300. A shoulder 312 extends radially outward from the inner chuck 212 adjacent the recess 308 and between the recess 308 and the second end 300. The insertion portion 296 defines a pair of inclines 316 at the second end 300. A bore 320 extends along axis A4 through the inner chuck 212 and a plurality of slits 324 extend axially from the first end 292 and terminate between the first and second ends 292, 300.

The first spring 216 includes a ring portion 328 that has a substantially circular cross-section through at least an approximately 270-degree range. An extension portion 332 extends tangentially from an end 336 of the ring portion 328. An alignment tab 340 extends radially inward from the opposite end 344.

The chuck holder 220 includes a bore 348 that extends along an axis A5 through the chuck holder 220 from the first end 352 to the second end 356. The first end 352 includes a pair of inclines 360. Each incline 360 includes an angled surface 364 that extends to and terminates at an edge 368 axially offset from the adjacent angled surface 364. A pair of slots 372 with an oval cross-section extend through the chuck holder 220 and are spaced approximate 180 degrees apart. The second end 356 defines a substantially flat, annular surface 376.

The retainer clip 224 includes a ring portion 380 that has an arcuate length that through an approximately 180 degree range and extensions 384 that extend radially inward from opposite ends 388, 392 of the ring portion 380.

The collet 200 is assembled by inserting the second spring 228 into an internal bore 396 of the output shaft 204. In some embodiments, the second spring 228 may be a compression spring. The chuck holder 220 is then inserted into the internal bore 396 with the annular surface 376 abutting the second spring 228. The retainer clip 224 is coupled to the output shaft 204 such that the extensions 384 are disposed in the holes 400 that extend through the output shaft 204. The extensions 384 extend further into the slots 372 of the chuck holder 220 and retain the rotational position of the chuck holder 220 relative to the output shaft 204. The first spring 216 is coupled to the engagement portion 288 of the inner chuck 212 with the ring portion 328 disposed in the recess 308 and abutting the shoulder 312, and the alignment tab 340 extending into one of the slits 324 of the inner chuck 212. The insertion portion 296 of the inner chuck 212 is inserted into the internal bore 396 of the output shaft 204. The inclines 360 of the chuck holder 220 are aligned with and biased toward engagement with the inclines 316 of the inner chuck 212 by the second spring 228. Rotation of the inner chuck 212 relative to the chuck holder 220 is permitted in one rotational direction while engagement of the inclines 360 of the chuck holder 220 and the inclines 316 of the inner chuck 212, along with engagement of the retainer clip 224 with the chuck holder 220 and output shaft 204 prohibit rotation of the inner chuck 212 in an opposite direction.

The outer nut 208 is then coupled to the output shaft 204, with the internal threads 256 of the outer nut 208 threadedly engaging the external threads 404 of the output shaft 204. As the outer nut 208 is coupled to the output shaft 204, the extension portion 332 of the first spring 216 engages the teeth 264 of the outer nut 208 for co-rotation. As the outer nut 208 is rotated onto the output shaft 204, the incline portion 268 of the tooth 264 elastically deforms the extension portion 332 by biasing the extension portion 332 radially inward. As the extension portion 332 reaches and passes the edge 272 of a tooth 264, the compressive force imparted by the incline portion 268 is relieved and the extension "snaps" back to its initial position, providing both a tactile and audible feedback of the advancement of the outer nut 208. As the outer nut 208 is threaded onto the output shaft 204, the surface 260 of the engagement portion 244 engages the engagement surface 304 of the inner chuck 212. Engagement between the outer nut 208 and inner chuck 212 elastically deforms the inner chuck 212 via the slits 324 to engage and clamp an instrument inserted into the bore 320 of the inner chuck 212.

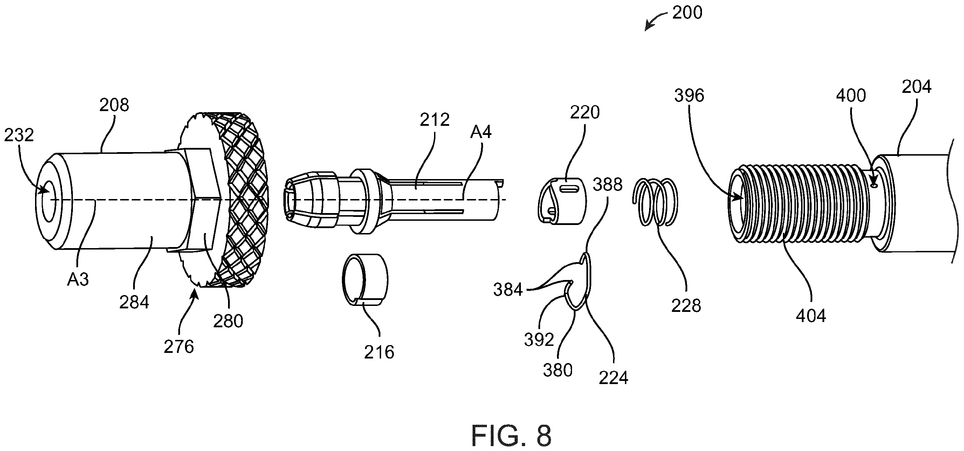

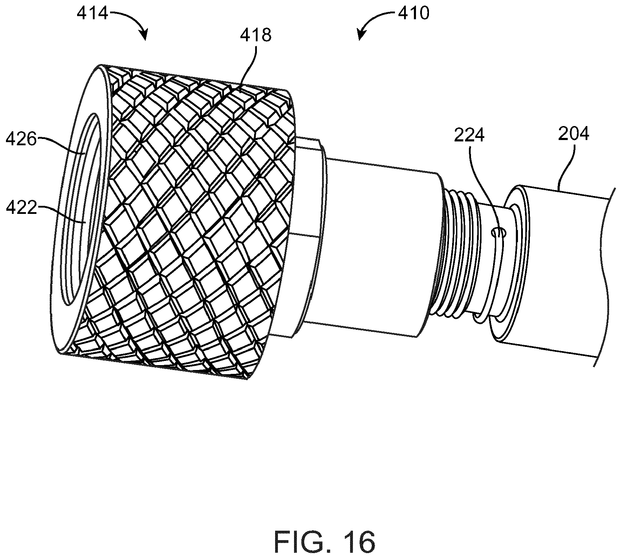

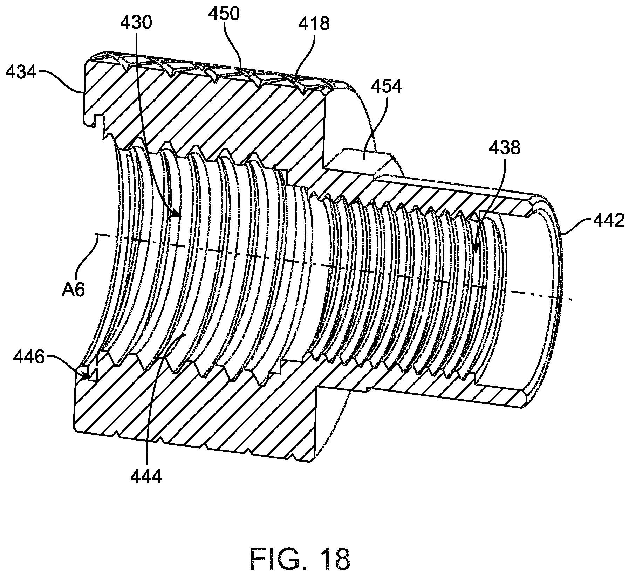

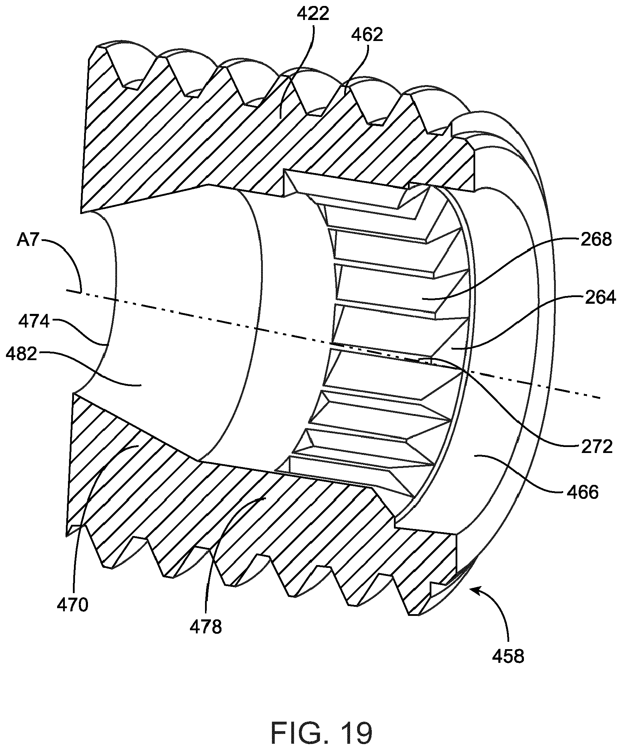

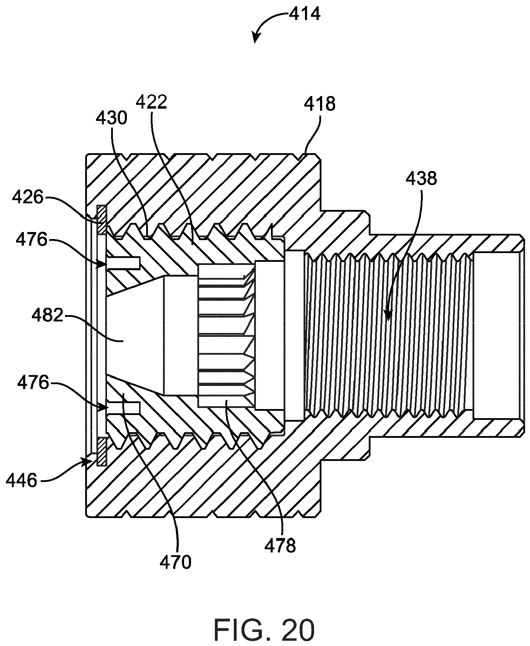

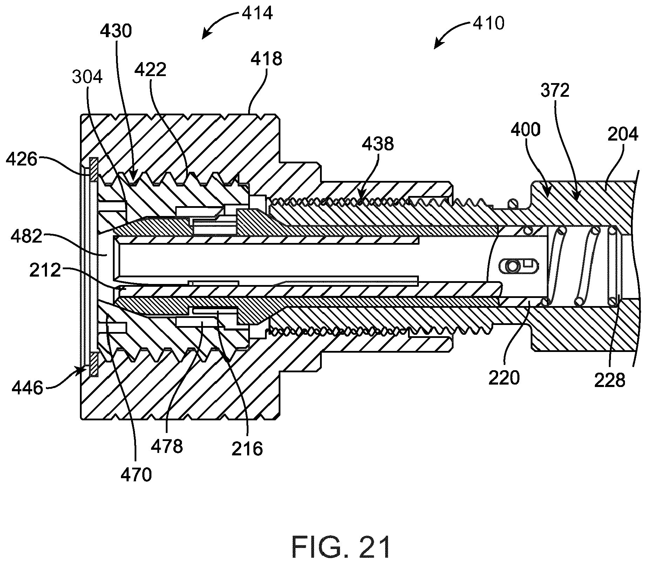

FIGS. 16-21 illustrate another exemplary quick-change collet 410 according to the disclosure (referred to in the description as "collet 410") that may be attached to a tool (e.g., an end mill, a drill press, etc.) to provide rotational output to an implement (e.g. a cutting or boring implement). The collet 410 includes an inner chuck 212, a first spring 216, a chuck holder 220, a retainer clip 224, and a second spring 228 the same as or similar to those in the previous embodiment illustrated in FIGS. 8-16.

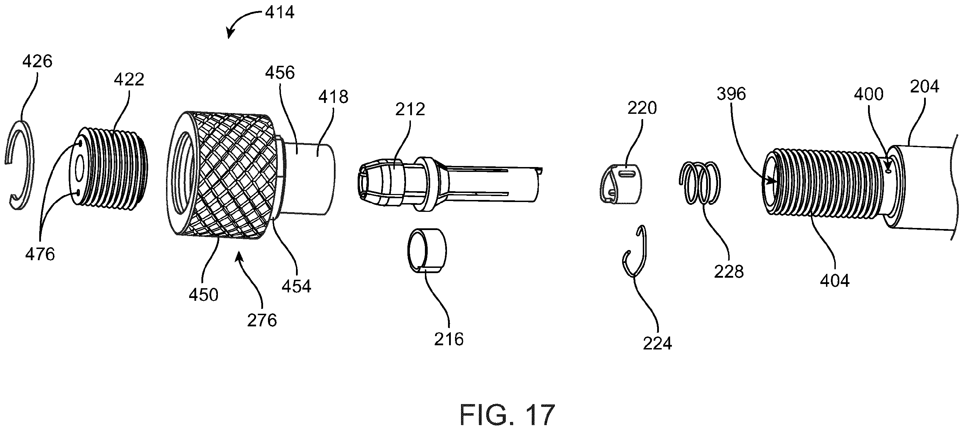

The collet 410 also includes an outer nut assembly 414 that includes an outer nut 418, an inner nut 422, and a retention clip 426. A first internal bore 430 extends along an axis A6 into the outer nut 418 from the first end 434 and a second internal bore 438 extends along axis A6 into the outer nut 418 from the opposite second end 442. The first and second internal bores 430, 438 include internal threads 444 with different thread profiles. The internal threads 444 define a portion of the first and second internal bores 430, 438. In other embodiments, the first and second internal bores 430, 438 may have the same thread profile. The outer nut 418 includes a groove 446 that extends radially outward from the first internal bore 430 adjacent the first end 434. The outer nut 418 includes engagement structures similar to engagement structures 276 facilitating easier gripping and turning of the outer nut assembly 414. It will be appreciated that the outer nut 418 may have engagement structures similar to engagement structure 276 including a textured finish (e.g., knurls or another textured surface) of an outer surface 450 of the outer nut 418 adjacent the first end 434, that facilitate easier gripping and turning of the outer nut 418, easing assembly of the collet 410. As shown in FIG. 17, the illustrated embodiment further optionally includes a hex 454 defined on the outer surface 456 that is engageable by a tool (e.g., a box wrench) to apply a larger amount of torque to the outer nut 418 than would be possible by finger-tightening the outer nut 418. In some embodiments, the outer nut 418 comprises an aluminum alloy or other lightweight metallic alloy, with structures formed via a machining process.

The inner nut 422 defines an outer surface 458 that has external threads 462 that are engageable with the internal threads 444 of the first internal bore 430 of the outer nut 418. A collet bore 466 extends along an axis A7 through the inner nut 422 and defines an engagement portion 470 at a first end 474 of the inner nut 422. The inner nut 422 may include two holes 476 that can be used to aid in inserting the inner nut 422 into the outer nut 418 as well as extracting the inner nut 422 from the outer nut 418. The inner nut 422 further includes a tooth portion 478 adjacent the engagement portion 470. The engagement portion 470 defines a surface 482 with a tapered or semispherical profile. The tooth portion 478 is substantially the same as the tooth portion 248 of the previous embodiment, including a plurality of teeth 264 spaced about the collet bore 466, with each tooth 264 defining an incline portion 268 extending inwardly into the collet bore 466 and terminating at an edge 272 that is substantially parallel to the axis of the collet bore 466. The edge 272 is radially offset from the incline portion 268 of an adjacent tooth 264. In some embodiments, the inner nut 422 comprises an iron-nickel alloy, formed via a powder metallurgy process.

The assembly process of the collet 410 remains substantially similar to the assembly process described above for the previous embodiment of the collet 200. The outer nut assembly 414 is assembled by threading the inner nut 422 into the first internal bore 430 of the outer nut 418, for instance, with the aid of holes 476. The retention clip 426 is inserted into the groove 446 defined adjacent the first end 434 of the outer nut 418 and abuts the inner nut 422. The outer nut assembly 414 is then coupled to the output shaft 204 substantially the same as the outer nut 208 is coupled to the output shaft 204 in the collet 200. The outer nut assembly 414 provides the same tactile and audible feedback to a user as the outer nut assembly 414 is threaded onto the output shaft 204 and the first spring 216 engages the outer nut assembly 414.

The above exemplary collets 10, 210, 410 have a reduced weight relative to existing quick-change collets and provide tactile and/or audible feedback to a user as the collet 10, 210, 410 is tightened.

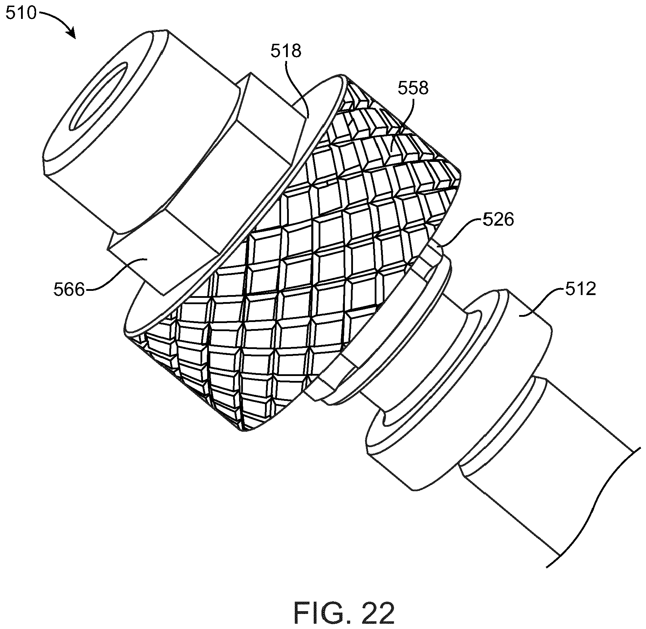

FIGS. 22-30 illustrate another exemplary collet 510 that can be coupled to a tool (e.g., an end mill, a drill press, etc.) to provide rotational output to an implement (e.g., a tool bit, a rotary tool bit, a cutting implement, or a boring implement). The collet 510 may be a quick-change collet 510. The collet 510 provides reduced weight, a simplified structure (e.g., fewer components or parts), and reduced costs relative to existing collets. The collet 510 further provides a tactile and audible feedback when coupled to the tool.

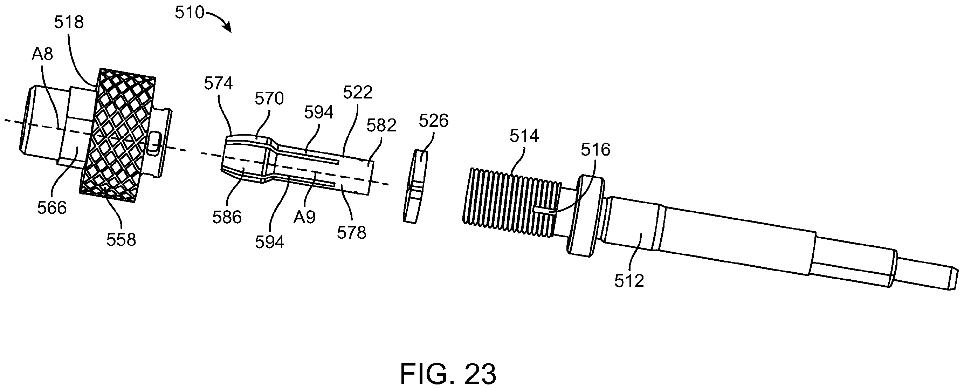

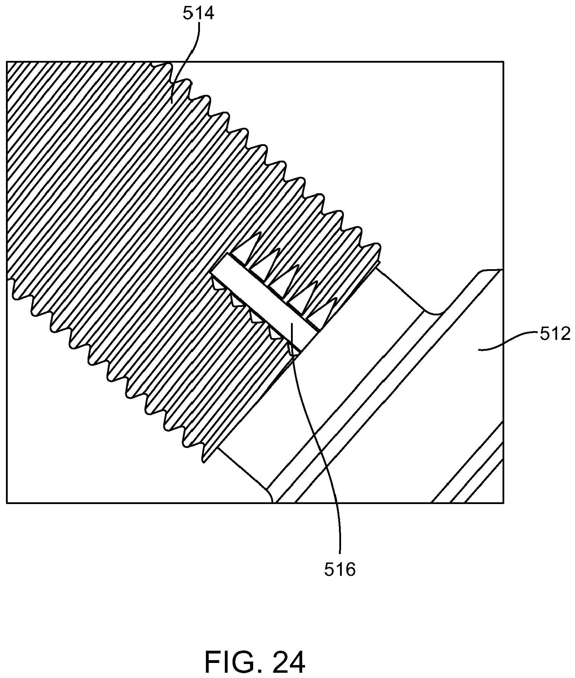

With reference to FIGS. 23 and 24, the collet 510 is coupled to an output shaft 512 of the tool. The output shaft 512 includes external threads 514 and grooves 516. The grooves 516 can be formed in the external threads 514 such that some of the external threads 514 extend around a portion of a circumference of the output shaft 512 (e.g., around most of the circumference, as shown). In other words, the output shaft 512 may have one or more grooves 516 that are annularly spaced around the output shaft 512 and that interrupt the external threads 514. The output shaft 512 can include one, two, three, four, or five or more annularly-spaced grooves 516. As described in more detail below, the collet 510 is coupled to the output shaft 512 to provide rotation output to an implement (e.g., a tool bit, a cutting implement, or a boring implement).

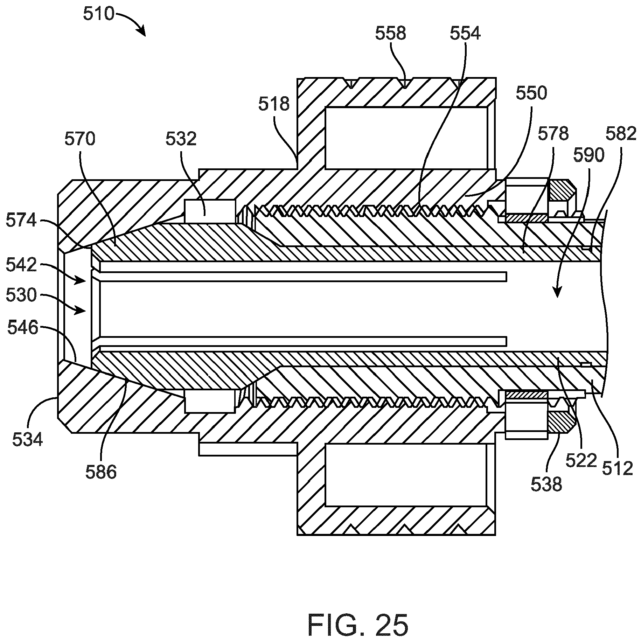

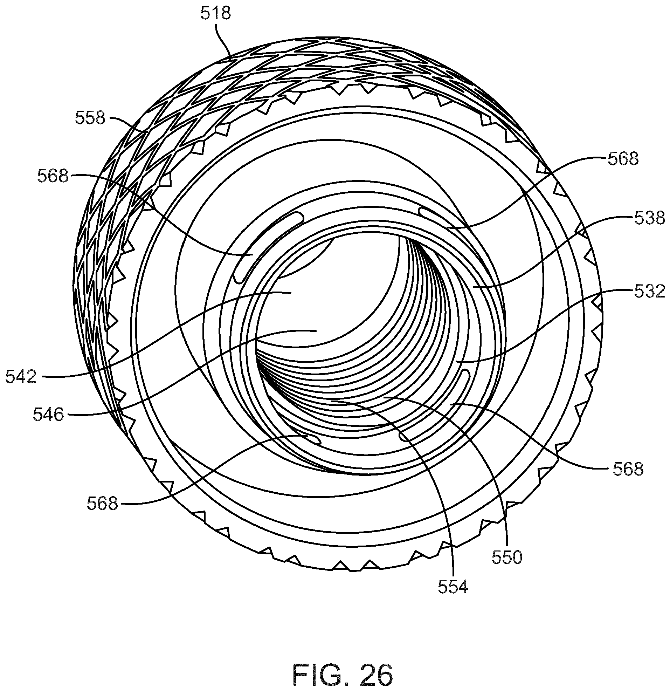

With reference to FIG. 23, the collet 510 includes an outer nut 518, an inner chuck 522, and a spring 526. The outer nut 518 defines a collet bore 530 (e.g., an inner surface 532 of the outer nut 518 defines the collet bore 530) that extends axially through the outer nut 518 along an axis A8 between a first end 534 (e.g., to which a cutting implement is coupled) and a second end 538 (FIG. 25). As shown in FIGS. 25 and 26, the outer nut 518 includes an engagement portion 542 that defines an engagement surface 546 with a tapered or semi-spherical profile adjacent the first end 534. The engagement portion 542 includes a portion of the inner surface 532. The engagement portion 542 defines a portion of the collet bore 530. The outer nut 518 also includes a threaded portion 550 that extends axially from the engagement surface 546 toward or to the second end 538 and that has internal threads 554. The threaded portion 550 includes a portion of the inner surface 532. The threaded portion 550 defines a portion of the collet bore 530.

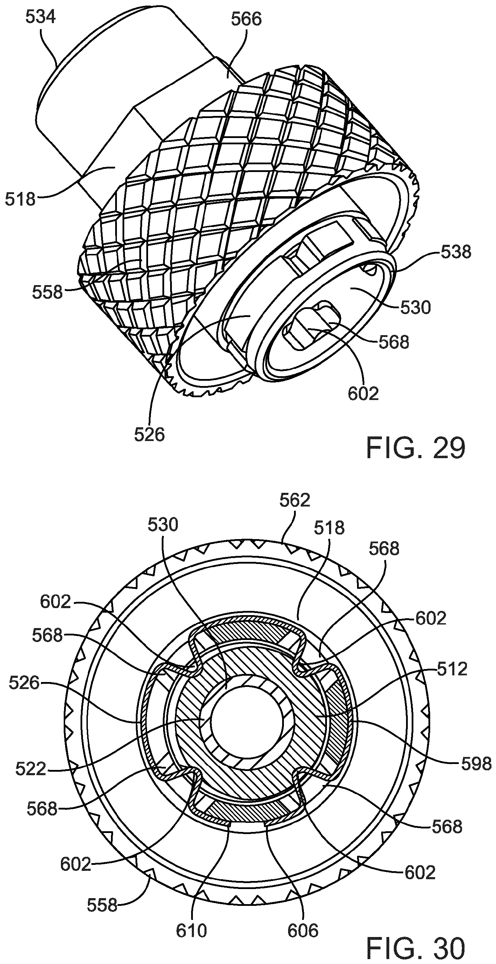

The outer nut 518 also includes an engagement structure 558 (e.g., knurls or textured surface) that facilitates easier gripping and turning of the outer nut 518. The illustrated engagement structure has a repeating diamond shape. As shown in FIGS. 22 and 23, the outer nut 518 further includes a hex 566 that engageable with a tool (e.g., box wrench) to apply a greater amount of torque to the outer nut 518 as compared to hand-tightening the outer nut 518 to the tool. With reference to FIGS. 26 and 29, the outer nut 518 defines pockets, holes, or apertures 568. The apertures 568 can include two, three, four, or five apertures 568. In some constructions, the outer nut 518 may include any quantity of apertures 568. As shown in FIGS. 25 and 26, the apertures 568 are spaced apart from the threaded portion 550 (e.g., disposed closer to the second end 538 of the outer nut 518. Stated another way, the illustrated apertures 568 are not positioned in the threaded portion 550.

With reference to FIGS. 23 and 25, the inner chuck 522 includes an engagement portion 570 at a first end 574 of the inner chuck 522 and an insertion portion 578 that extends from the engagement portion 570 to a second end 582 of the inner chuck 522. The engagement portion 570 includes an outer surface 586 that defines a tapered or semi-spherical profile. The insertion portion 578 includes a substantially cylindrical profile. A chuck bore 590 extends along an axis A9 through the inner chuck 522 between the first end 574 and the second end 582. The chuck bore 590 receives a cutting implement (e.g., a saw blade, etc.), a rotary tool bit, or a rotary implement (e.g., engraving bits, sanding drums, cutting wheels, etc.). A plurality of slits 594 extend axially in a direction extending along the axis A9 from the first end 574. The slits 594 may terminate between the first end 574 and the opposite second end 582.

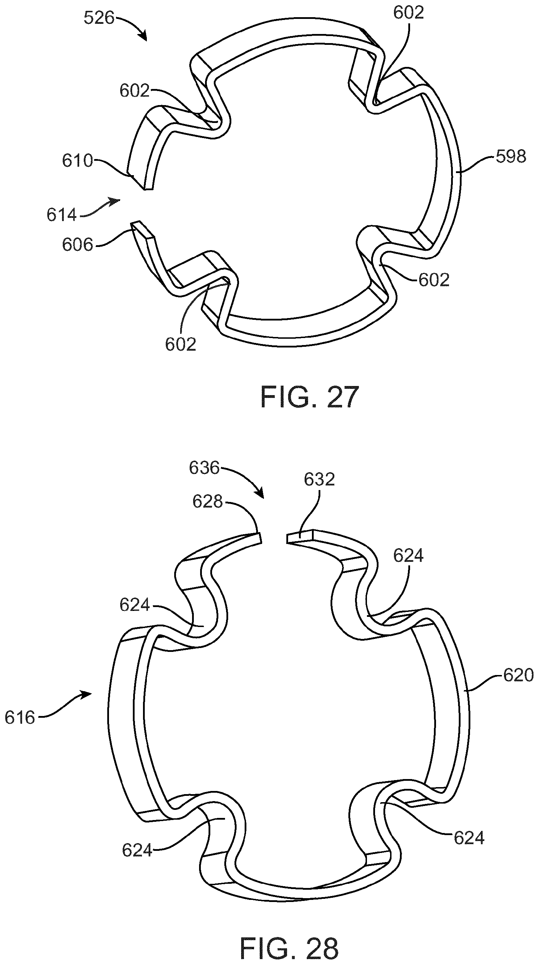

The spring 526 is coupled to the outer nut 518 and, as shown in FIG. 27, the spring 526 includes an annular ring portion 598 that defines one or more ridges 602 (e.g., one, two, three, four, or five, etc.). In some embodiments, the spring 526 may be a stamp spring. The one or more ridges 602 may also be referred to as extension portions of the spring 526. The spring 526 also includes a first end portion 606 and a second end portion 610. The first end portion 606 and the second end portion 610 of the spring 526 define or are separated by a gap 614. The gap 614 allows the spring 526 to flex or yield to couple to and decouple from the outer nut 518, and to flex or yield on rotation of the outer nut 518 relative to the output shaft 512. In one exemplary embodiment, as shown in FIG. 27, the ridges 602 may be defined by a V-shape or a triangular profile with a curvature on the radially-inner side of the spring 526. The V-shape or triangular profile with the curvature on the radially-inner side of the spring 526 provides additional flex or yield to the spring 526 to couple and decouple from the outer nut 518. Other shapes of the ridges 602 that facilitate movement of the ridges 602 into and out of the apertures 568 are possible and considered herein.

FIG. 28 illustrates another embodiment of a spring 616. The spring 616 can be coupled to the outer nut 518. The spring 616 can be similar to the spring 526 described above, and the following differences explained below. In some embodiments, the spring 616 may be a stamp spring. The spring 616 includes an annular ring portion 620 that defines a plurality of ridges 624 (e.g., two, three, four, or five ridges 624). The ridges 624 may also be referred to as extension portions of the spring 616. The spring 616 also includes a first end portion 628 and a second end portion 632. The first end portion 628 and the second end portion 632 of the spring 616 define or are separated by a gap 636. The gap 636 allows the spring 616 to flex or yield to couple to and decouple from the outer nut 518, and to flex or yield on rotation of the outer nut 518 relative to the output shaft 512. As shown in FIG. 28, the ridges 624 may be defined by a U-shape or a semi-circular profile with a curvature on the radially-inner side of the spring 616. The U-shape or semi-circular profile with the curvature on the radially-inner side of the spring 616 provides additional flex or yield to the spring 616 to couple and decouple from the outer nut 518. It will be appreciated that the curvature of the ridges 602 in FIG. 27 is smaller than the curvature of the ridges 624 in FIG. 28 (i.e., the curvature of the ridges 602 in FIG. 27 has a smaller radius), and that other shapes of the ridges 624 that facilitate movement of the ridges 624 into and out of the apertures 568 are possible and considered herein.

Although the remaining disclosure is described with regard to the spring 526 of FIG. 27, it will be appreciated that the spring 616 illustrated in FIG. 28 may be substituted for or replaced by the spring 526 and that the following description applies equally to the outer nut 518 and the spring 616.

The collet 510 is assembled by coupling the spring 526 to the outer nut 518. The spring 526 is manipulated relative to the outer nut 518 such that the ridges 602 of the spring 526 are aligned with and positioned within the apertures 568 of the outer nut 518 (FIGS. 29 and 30). The spring 526 is secured to the outer nut 518 for co-rotation. The spring 526 flexes (e.g., expands or compresses) as the spring 526 is positioned within the apertures 568 of the outer nut 518. That is, the spring 526 expands (the gap 614 widens) during attachment to the outer nut 518. After alignment of the ridges 602 with the apertures 568, the spring 526 contracts to tightly engage the outer nut 518. When the spring 526 is being secured to the outer nut 518, the spring 526 may be rotated relative the outer nut 518 until the ridges 602 fit into the apertures 568. The spring 526, 616 fits snugly on or snaps into the outer nut 518 adjacent the second end 538. The ridges 602 extend into the collet bore 530 beyond the inner surface 532 of the outer nut 518. The inner chuck 522 is inserted into the collet bore 530 such that the engagement portion 570 of the inner chuck 522 engages or is positioned adjacent the engagement surface 546 of the outer nut 518. After the spring 526 is secured to the outer nut 518, the spring 526 and the outer nut 518 are rotatable together relative to the output shaft 512.

The outer nut 518, with the inner chuck 522 and the spring 526, is coupled to the output shaft 512 via threaded engagement of the internal threads 554 of the outer nut 518 and the external threads 514 of the output shaft 512. As the outer nut 518 is tightened onto the output shaft 512, the inner chuck 522 elastically deforms inward via the slits 594 into clamping engagement with a cutting implement that has been inserted into the inner chuck 522. As the outer nut 518 is tightened onto the output shaft 512, the ridges 602 of the spring 526 engage with and disengage from the grooves 516 on the output shaft 512 (FIGS. 23 and 24) on rotation of the outer nut 518 relative to the output shaft 512. Engagement between the ridges 602 of the spring 526 and the groove(s) 516 of the output shaft 512 provides tactile and audible feedback to a user that the collet 510 is installed onto the output shaft 512 of the tool. For example, the tactile, audible feedback is produced by a sound generated through the interference between the ridges 602 of the spring 526 and the groove(s) 516 of the output shaft 512 when rotating the collet 510 relative to the output shaft 512.

The external threads 514 extend along the output shaft 512 a first length that is measured in an axial direction from an end of the output shaft 512 along the output shaft 512. The groove(s) 516 extend a second length along the output shaft 512 and break up at least some of the external threads 514 inward from the inner end of the output shaft. The length of the external threads 514 or the length of the groove(s) 516, or a combination thereof, determines when the tactile and/or audible feedback occurs during installation of the collet 510 onto the output shaft 512. For example, the second length of the groove(s) 516 can be relatively short (e.g., 0.25 inches, 0.3 inches) to provide a tactile, audible feedback to the user for a first amount of time during tightening of the collet 510 onto the output shaft 512. In another example, the second length of the groove(s) 516 can be longer (e.g., 0.4 inches, 0.5 inches, etc.) to provide a tactile, audible feedback to the user for a second amount of time that is greater than the first amount of time during tightening of the collet 510 onto the output shaft 512.

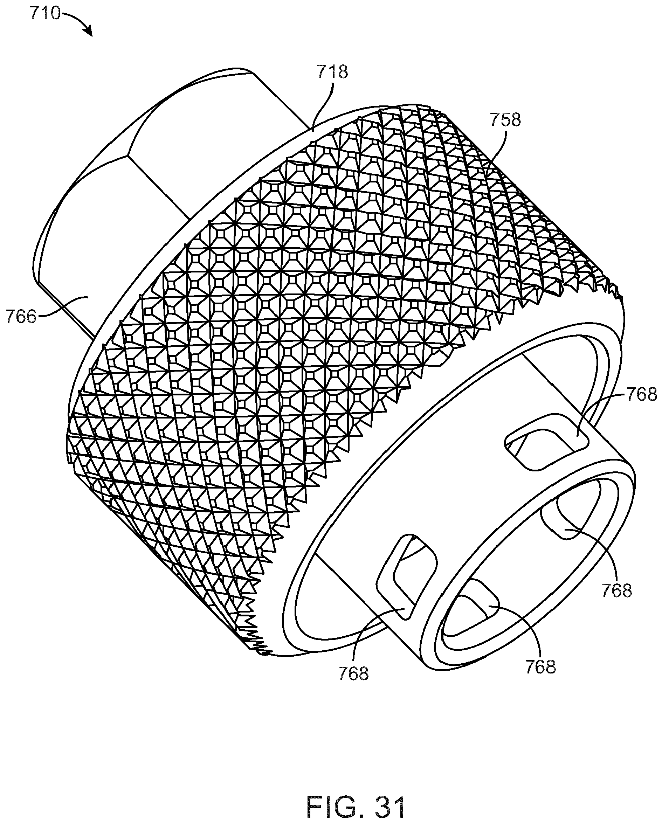

FIG. 31 illustrates another exemplary collet 710 that can be coupled to a tool (e.g., an end mill, a drill press, a rotary tool, etc.) to provide rotational output to an implement (e.g., a rotary tool bit, a cutting implement, or a boring implement). The collet 710 may be a quick-change collet 710. The collet 710 provides reduced weight, a simplified structure (e.g., fewer components or parts), and reduced costs relative to manufacturing of existing collets. The collet 710 provides a tactile and audible feedback when coupled to the tool. The collet 710 may be similar to the collet 510 described above, and only the differences are explained below. It will be appreciated that the features of the collet 510 described above are incorporated into the collet 710 unless otherwise indicated.

With reference to FIG. 31, the collet 710 includes an outer nut 718 that has an engagement structure 758 (e.g., knurls or a textured surface) that facilitates easier gripping and turning of the outer nut 718. It will be appreciated that the engagement structure 758 illustrated in FIG. 31 is different than the engagement structure 558 shown in FIGS. 22 and 23. That is, the engagement structure 758 may include a repeating pyramidal shape, whereas the engagement structure 558 has a repeating diamond or diamond-like shape. The engagement structure 758 in FIG. 31 may have a longer axial length (and a corresponding greater amount of knurls) relative to the engagement structure 558 illustrated in FIGS. 22 and 23. Other shapes, knurl designs, or textured surface designs that facilitate gripping and turning of the outer nut 718 are possible and considered herein. The outer nut 718 includes a hex 766 that is engageable with a tool (e.g., box wrench) to apply a greater amount of torque to the outer nut 718 as compared to hand-tightening the outer nut 718 to the tool. It will be appreciated that the hex 766 may have a longer axial length relative to the hex 566 illustrated in FIG. 22 to facilitate easier engagement. As shown in FIG. 31, the outer nut 718 defines pockets, holes, or apertures 768 that are the same as or similar the aperture 568 illustrated, for example, in FIG. 26 and that can be engaged by the spring 526. The collet 710 may have any quantity of apertures 768.

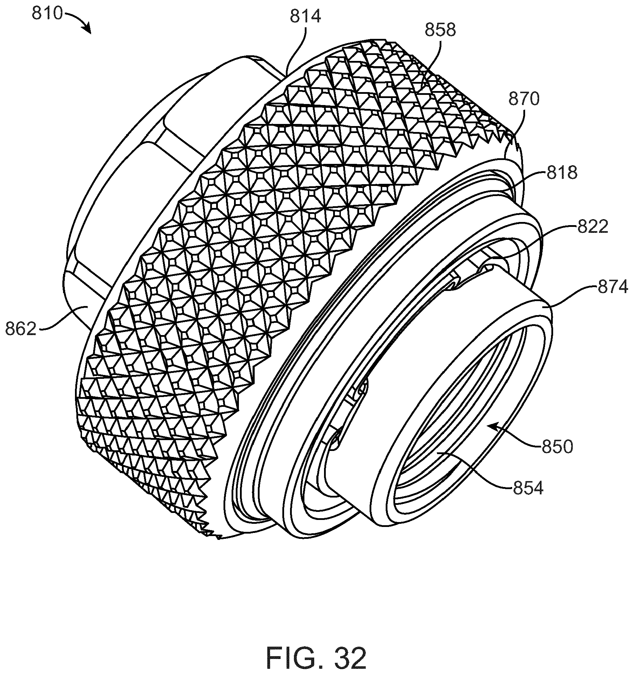

FIGS. 32-34 illustrate another exemplary collet 810 that can be coupled to a tool to provide rotational output to an implement. The collet 810 may be a quick-change collet. The collet 810 provides reduced weight, a simplified structure (e.g., fewer components or parts), and reduced costs compared to existing collets. The collet 810 further provides a tactile and audible feedback when coupled to the tool.

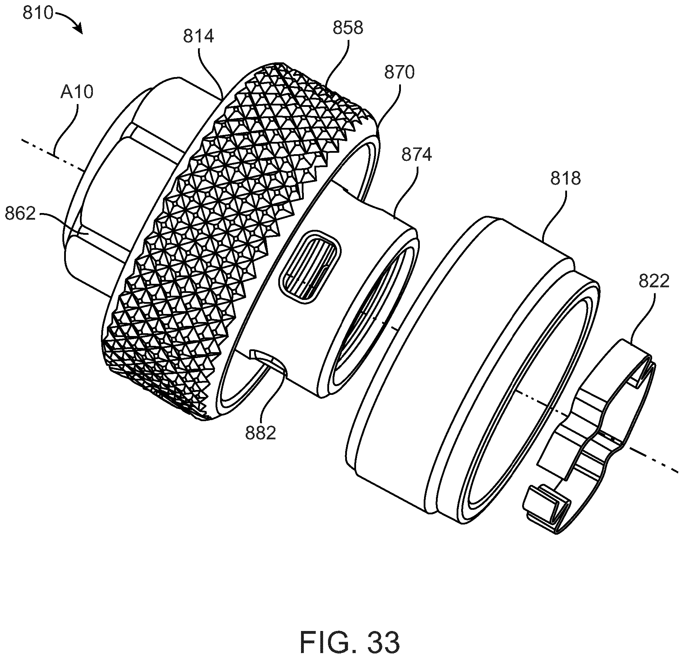

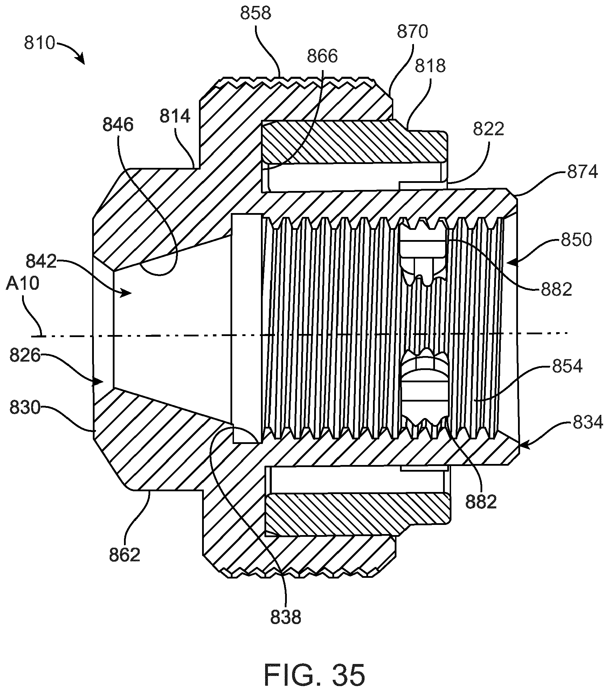

With reference to FIGS. 32 and 33, the collet 810 includes an outer nut 814, an insert 818, and a spring 822. The outer nut 814 defines a collet bore 826 that extends axially through the outer nut 814 along an axis A10 between a first end 830 and a second end 834 (FIG. 35). In other words, an inner surface 838 of the outer nut 814 defines the collet bore 826. As shown in FIG. 35, the outer nut 814 includes an engagement portion 842 that defines an engagement surface 846 with a tapered or semi-spherical profile adjacent the first end 830. The engagement portion 842 includes a portion of the inner surface 838. The engagement portion 842 defines a portion of the collet bore 826. The outer nut 814 also includes a threaded portion 850 that extends axially from the engagement surface 846 toward or to the second end 834. The threaded portion 850 includes internal threads 854 that extend axially from the engagement surface 846 toward or to the second end 834. The threaded portion 850 defines a portion of the collet bore 826. It will be appreciated that the outer nut 814 may include a shorter axial length measured along the axis A10 relative to the outer nut 518 illustrated in FIGS. 23 and 25 to ensure the insert 818 covers the spring 822 as described in more detail below.

With reference to FIGS. 32 and 35, the outer nut 814 includes an engagement structure 858 (e.g., knurls or textured surface) that facilitates easier gripping and turning of the outer nut 814. The engagement structure 858 can be similar to the engagement structure 758 illustrated in FIG. 31. That is, the engagement structure 858 may include a repeating pyramidal shape. Other shapes, knurl designs, or textured surface designs that facilitate griping and turning of the outer nut 814 are possible and considered herein. The outer nut 814 also includes a hex 862 engageable with a tool (e.g., box wrench) to apply a greater amount of torque to the outer nut 814 as compared to hand-tightening the outer nut 814 to the tool.

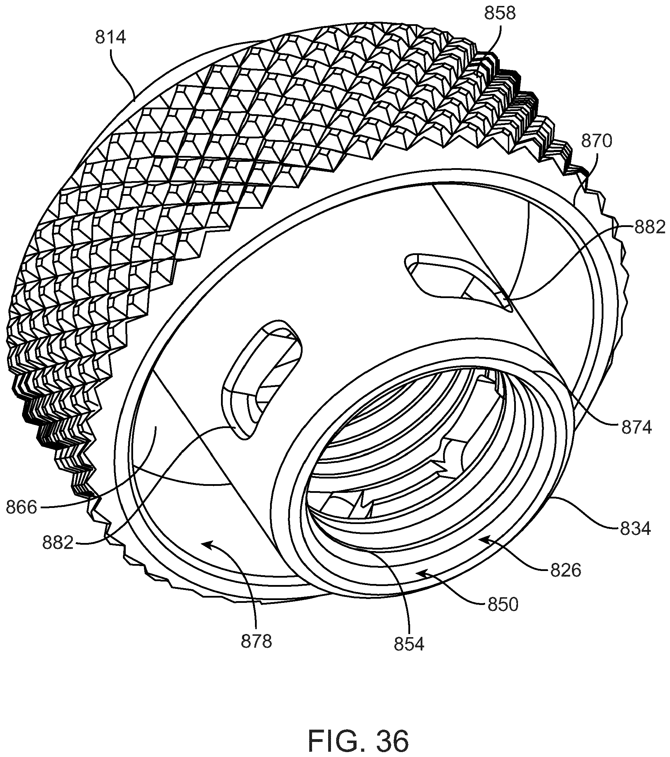

As shown in FIGS. 35 and 36, the outer nut 814 includes an inner face 866, an outer cylindrical wall 870, and an inner cylindrical wall 874. The outer cylindrical wall 870 extends axially from the inner face 866 along the axis A10. The outer cylindrical wall 870 may include the engagement structure 858. The inner cylindrical wall 874 extends axially from the inner face 866 along the axis A10. The outer cylindrical wall 870 and the inner cylindrical wall 874 may be coaxial (e.g., share the common axis A10). The inner face 866, the outer cylindrical wall 870, and the inner cylindrical wall 874 together define a recess 878. The recess 878 extends axially along the axis A10 between the inner face 866, the outer cylindrical wall 870, and the inner cylindrical wall 874. The recess 878 is separate from the collet bore 826. In other words, the recess 878 is not in communication with to the collet bore 826.

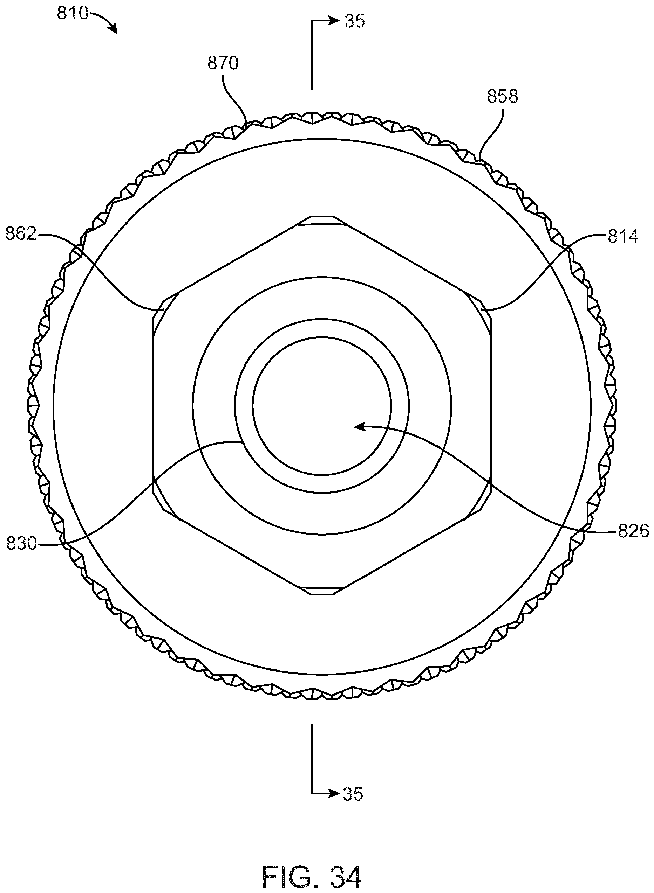

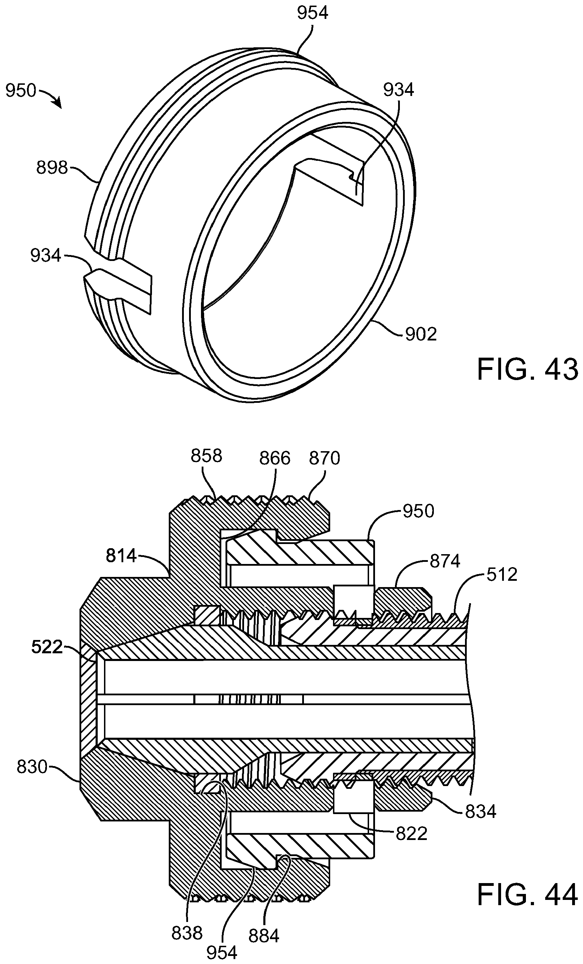

With reference to FIGS. 33 and 35, the outer nut 814 defines apertures 882. The apertures 882 may also be referred to as pockets, holes, or slots. The apertures 882 may include two, three, four, or five apertures 882. In other embodiments, the outer nut 814 may include any quantity of apertures 882. As shown in FIGS. 34 and 35, the apertures 882 are positioned in the inner cylindrical wall 874. The apertures 882 extend through the inner cylindrical wall 874 and exit in the threaded portion 850. In other words, the apertures 882 are located in the threaded portion 850 and/or the internal threads 854. The apertures 882 may be positioned inward at an axial location along the axis A10 relative to the second end 834. In other words, the apertures 882 may be positioned offset at an axial location along the axis A10 relative to the second end 834. In some embodiments, the outer nut 814 includes a lip 884 extending from the outer cylindrical wall 870 (FIG. 44). The lip 884 of the outer nut 814 may engage the recess 878 to retain the insert 818 or another insert (e.g., insert 950).

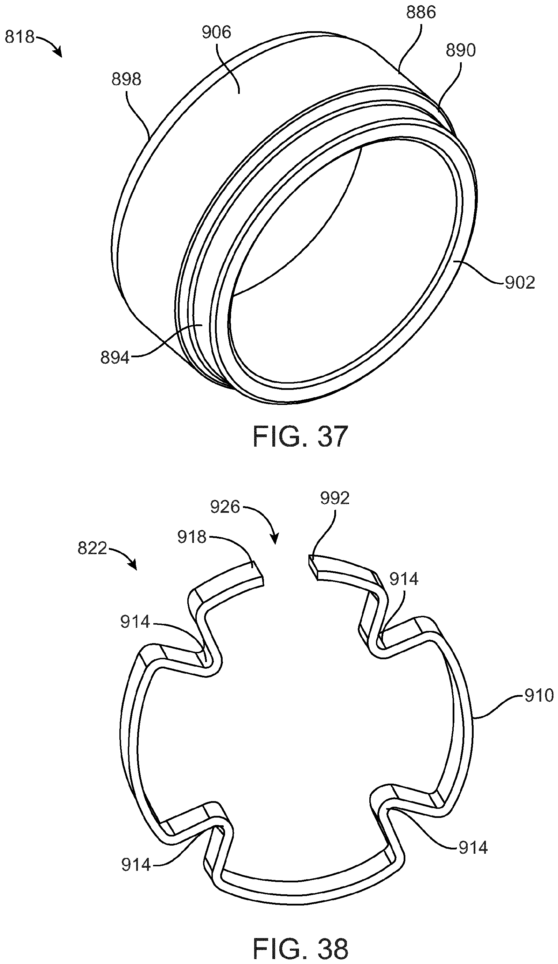

FIGS. 33 and 37 illustrate the insert 818. The insert 818 may also be referred to as a ring, a sleeve, or a cover. The insert 818 includes a thickened portion 886, a tapered portion 890, and a flange 894. The insert 818 includes a first end 898 and a second end 902. The insert 818 also includes an outer surface 906 extending between the first end 898 and the second end 902. The thickened portion 886, the flange 894, and the tapered portion 890 each form a portion of the outer surface 906. The thickened portion 886 extends from the first end 898, the tapered portion 890 extends from the thickened portion 886, and the flange 894 extends from the tapered portion 890 to the second end 902. The thickened portion 886 includes a larger thickness than a thickness of the flange 894. The insert 818 is coupled to the outer nut 814 to cover the spring 822 (i.e. the spring 822 is not visible from a point away from the collet 810). In the illustrated embodiment and in other embodiments, the insert 818 may shield the spring 822 from the outside elements. The insert 818 may be formed from a polymer, plastic, metal, or aluminum material.

FIGS. 33 and 38 illustrate the spring 822. The spring 822 may be similar to the spring 526 described above and illustrated in FIG. 27. The spring 822 includes an annular ring portion 910 that defines one or more ridges 914 (e.g., one, two, three, four, or five, etc.). The one or more ridges 914 may also be referred to as extension portions of the spring 822. In one exemplary embodiment, as shown in FIG. 38, the ridges 914 may be defined by a V-shape or a triangular profile with a curvature on a radially-inner side of the spring 822. The V-shape or triangular profile with the curvature on the radially-inner side of the spring 822 provides additional flex or yield to the spring 822 to couple and decouple from the outer nut 814. Other shapes of the ridges 914 that facilitate movement of the ridges 914 into and out of the apertures 882 are possible and considered herein.

With continued reference to FIG. 38, the spring 822 also includes a first end portion 918 and a second end portion 922. The first end portion 918 and the second end portion 922 of the spring 822 define or are separated by a gap 926. The gap 926 allows the spring 822 to flex or yield to couple to and decouple from the outer nut 814, and to flex or yield on rotation of the outer nut 814 relative to an output shaft.

Although the remaining disclosure is described with reference to the spring 822 of FIG. 38, it will be appreciated that the spring 526 illustrated in FIG. 27 or the spring 616 illustrated in FIG. 28 may substitute or replace the spring 822 and that the following description applies equally to the outer nut 814 and the springs 526, 616, 822.

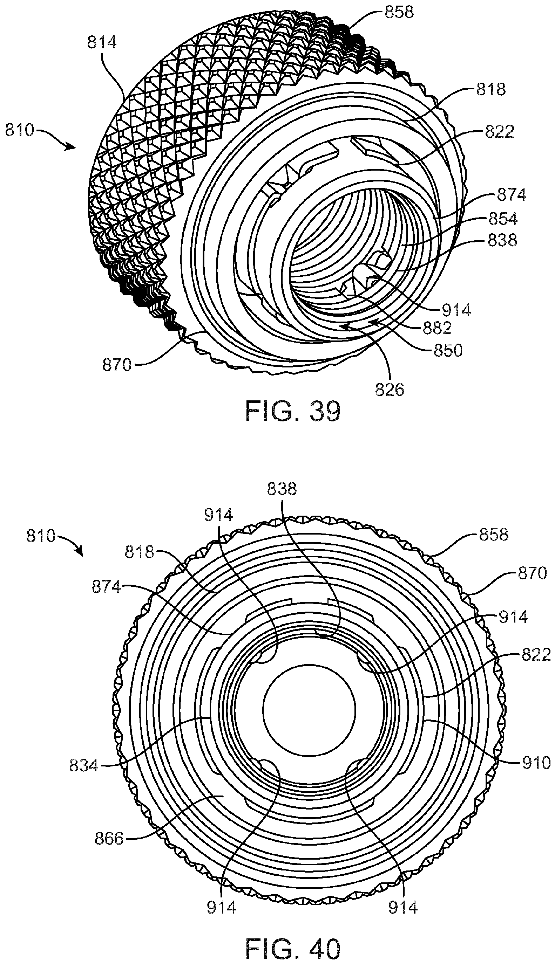

The collet 810 is assembled by coupling the spring 822 to the outer nut 814. The spring 822 is manipulated relative to the outer nut 814 such that the ridges 914 of the spring 822 are aligned with and positioned within the apertures 882 of the outer nut 814 (FIGS. 35 and 39). The spring 822 is secured to the outer nut 814 for co-rotation. The spring 822 flexes (e.g., expands or compresses) as the spring 822 is positioned within the apertures 882 of the outer nut 814. That is, the spring 822 expands (the gap 926 widens) during attachment to the outer nut 814. After alignment of the ridges 914 with the apertures 882, the spring 822 contracts to tightly engage the outer nut 814. The spring 822 may be rotated relative the outer nut 814 until the ridges 914 fit into the apertures 882. The spring 822 fits snugly on or snaps into the outer nut 814 adjacent the second end 834. The ridges 914 extend into the collet bore 826 beyond the inner surface 838 of the outer nut 814 (FIG. 40).

The insert 818 is coupled to the outer nut 814 such that the first end 830 of the insert 818 abuts or contacts the inner face 866 of the outer nut 814. The insert 818 is positioned in the recess 878 of the outer nut 814. The insert 818 is manipulated relative to the outer nut 814 such that the insert 818 bends or flexes as the insert 818 is positioned within the recess 878 of the outer nut 814. The insert 818 is adhered to the outer nut 814 by an adhesive, tape, or other suitable bonding agent. More specifically, the insert 818 is adhered to the inner face 866 and the outer cylindrical wall 870. The insert 818 fits in the outer nut 814 adjacent the second end 834. When installed, the insert 818 is spaced from the inner cylindrical wall 874. In other embodiments, the insert 818 may be inserted into the recess 878 such that an interference or press fit is formed between the insert 818 and the inner opening of the outer cylindrical wall 870.

The collet 810 may also include the inner chuck 522 described above. The inner chuck 522 receives a cutting implement, a rotary tool bit, or a rotary implement (e.g., engraving bits, sanding drums, cutting wheels, etc.). It will be appreciated that the features of the inner chuck 522 described above may be utilized with the collet 810 unless otherwise indicated. The inner chuck 522 is inserted into the collet bore 826 such that the engagement portion 842 of the inner chuck 522 engages or is positioned adjacent the engagement surface 846 of the outer nut 814. The description of the assembly of the inner chuck 522 and the outer nut 518 described above applies equally to the assembly of the outer nut 814 and the inner chuck 522.

The outer nut 814, with the inner chuck 522 and the spring 822, is coupled to the output shaft 512 described above. It will be appreciated that the features of the output shaft 512 described above are utilized with the collet 810 unless otherwise indicated. The description of the assembly of the outer nut 518, with the inner chuck 522 and the spring 526, to the output shaft 512 described above applies equally to the assembly of the outer nut 814, the inner chuck 522, the spring 822, and the output shaft 512.

The outer nut 814, with the inner chuck 522 and the spring 822, is coupled to the output shaft 512 via threaded engagement of the internal threads 854 of the outer nut 814 and the external threads 514 of the output shaft 512. As the outer nut 814 is tightened onto the output shaft 512, the inner chuck 522 elastically deforms inward via the slits 594 into clamping engagement with a cutting implement that has been inserted into the inner chuck 522. As the outer nut 814 is tightened onto the output shaft 512, the ridges 914 of the spring 822 engage with and disengage from the grooves 516 on the output shaft 512 on rotation of the outer nut 814 relative to the output shaft 512. Engagement between the ridges 914 of the spring 822 and the groove(s) 516 of the output shaft 512 provides tactile and audible feedback to a user that the collet 810 is installed onto the output shaft 512 of the tool. For example, the tactile, audible feedback is produced by a sound generated through the interference between the ridges 914 of the spring 822 and the groove(s) 516 of the output shaft 512 when rotating the collet 810 relative to the output shaft 512.

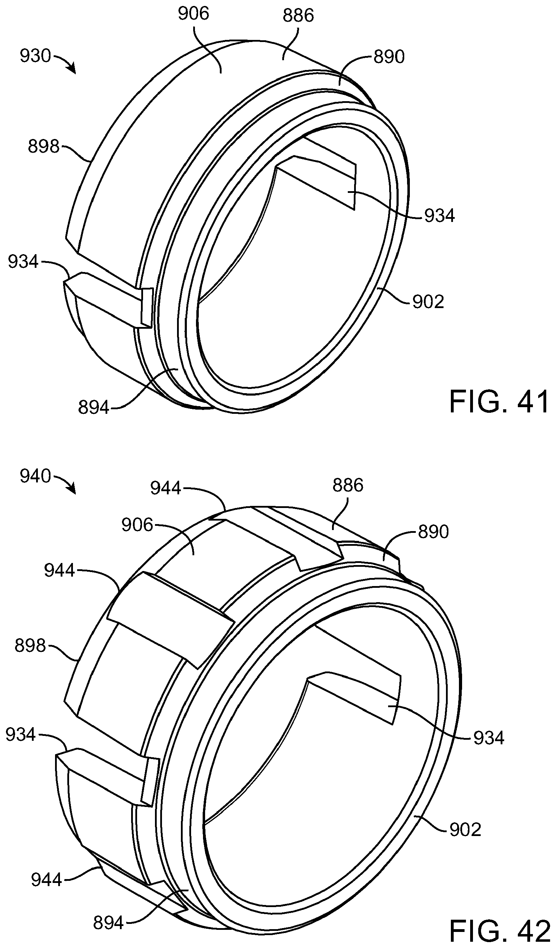

FIG. 41 illustrates another exemplary insert 930. The insert 930 may be similar to the insert 818 described above, and only the differences are explained below. It should be appreciated that the features of the insert 818 described above are incorporated into the insert 930 unless otherwise indicated. The insert 930 defines slots 934 and may have any quantity of slots 934. The slots 934 may extend entirely through a thickness of the insert 930 (i.e. a passageway may be formed from a point outside the insert 930 to an interior of the insert 930). The slots 934 may extend from the first end 898 to the tapered portion 890. The slots 934 may be annularly arranged or spaced about the insert 930. In the illustrated embodiment and in other embodiments, the slots 934 may prevent excessive deformation of the insert 930 during assembly. In some embodiments, the insert 930 may be devoid of slots.

FIG. 42 illustrates another embodiment of an insert 940. The insert 940 may be similar to the inserts 818, 930 described above, and only the differences are explained below. It would be appreciated that the features of the inserts 818, 930 described above are incorporated into the insert 940 unless otherwise indicated. The insert 940 defines grooves 944. The insert 940 may have any quantity of grooves 944. The grooves 944 may extend partially into a thickness of the insert 930 (i.e., a passageway may not be formed from a point outside the insert 940 to an interior of the insert 940). In some embodiments, the grooves 944 may be shallow. The grooves 944 may extend from the first end 898 to the tapered portion 890. The grooves 944 may be annularly arranged or spaced about the insert 940. In the illustrated embodiment and in other embodiments, the grooves 944 may be positioned on the insert 940 between the slots 934. Any number of grooves 944 may be positioned on the insert 940 between the slots 934. In the illustrated embodiment and in other embodiments, the grooves 944 may increase friction between the insert 940 and the outer nut 814 to prevent the insert 940 from being removed from the outer nut 814 during assembly.

FIG. 43 illustrated another embodiment of an insert 950. The insert 950 may be similar to the inserts 818, 930, 940 described above, and only the differences explained below. It would be appreciated that the features of the inserts 818, 930, 940 described above are incorporated into the insert 950 unless otherwise indicated. The insert 950 includes a lip 954. The lip 954 may extend around an outer perimeter of the insert 940. In other words, the lip 954 may extend circumferentially around the insert 940. The lip 954 may be elevated or positioned away from other portions of the insert 940 (i.e., elevated relative to the first end 898 and/or the second end 902). In the illustrated embodiment and in other embodiments, the lip 954 abuts the corresponding lip 884 of the outer nut 814 to retain the insert 940 to the outer nut 814 (FIG. 44).

Although the disclosure has been described in detail with reference to certain preferred embodiments, variations and modifications exist within the scope and spirit of one or more independent aspects of the disclosure as described.

Clause 1. A collet for a tool, the collet comprising: an outer nut including a grip and defining a collet bore configured to receive a chuck and having a collet engagement surface engageable with the chuck to selectively secure a tool accessory; and a spring including an extension portion engageable with an external part of an output shaft of the tool or an internal part of the outer nut to provide feedback to a user regarding securement of the collet.

Clause 2. The collet of clause 1, wherein the collet bore includes a threaded portion configured to engage the output shaft.

Clause 3. The collet of clause 2, wherein the outer nut defines one or more apertures engageable by the spring.

Clause 4. The collet of clause 3, wherein the one or more apertures are defined in a threaded portion of the outer nut.

Clause 5. The collet of clause 1, wherein the outer nut includes one or more apertures and the spring includes a corresponding quantity of extension portions, and wherein the one or more apertures are defined in an unthreaded portion of the outer nut.

Clause 6. The collet of clause 1, wherein the feedback includes an audible or tactile feedback.

Clause 7. The collet of clause 1, wherein the extension portion is engageable with a groove of the output shaft on rotation of the outer nut.

Clause 8. The collet of clause 1, wherein the extension portion of the spring is engageable with two or more of a plurality of grooves of the output shaft on rotation of the outer nut.

Clause 9. The collet of clause 1, wherein the internal part of the outer nut includes one or more teeth annularly arranged in the outer nut.

Clause 10. The collet of clause 9, wherein the extension portion of the spring is configured to engage the one or more teeth of the outer nut to provide feedback to the user regarding securement of the collet.

Clause 11. The collet of clause 1, wherein the collet includes a sleeve coupled to the outer nut and at least partially enclosing the spring.

Clause 12. A tool comprising: an output shaft coupled to the tool and including a threaded portion and a groove disposed in the output shaft; an inner chuck; and a collet selectively engageable with the output shaft, the collet including: an outer nut defining a collet bore configured to receive the inner chuck and having a collet engagement surface engageable with an end of the inner chuck to selectively secure a tool accessory to the output shaft; a spring coupled to the outer nut and including an extension portion configured to engage the groove to provide feedback to a user regarding securement of the tool accessory on the output shaft.

Clause 13. The tool of clause 12, wherein the collet bore includes a threaded portion, and wherein the output shaft is configured to threadably engage with the threaded portion.

Clause 14. The tool of clause 13, wherein the outer nut defines one or more apertures engageable by the spring.

Clause 15. The tool of clause 12, wherein the groove is one of a plurality of grooves annularly spaced on the output shaft, and wherein the extension portion of the spring is configured to engage the plurality of grooves to provide feedback to the user regarding securement.

Clause 16. A collet configured to couple to an output shaft of a tool, the collet comprising: an outer nut configured to engage the output shaft and defining apertures arranged annularly on the outer nut, the outer nut configured to selectively secure a tool accessory to the output shaft; a spring coupled to the outer nut and including extension portions, a first extension portion of the extension portions extending through a first aperture of the apertures and a second extension portion of the extension portions extending through a second aperture of the apertures to secure the spring to the outer nut for co-rotation, wherein each of the extension portions is configured to engage an external part of the output shaft.

Clause 17. The collet of clause 16, wherein the outer nut includes a threaded portion threadably engageable with the output shaft, and wherein the apertures are defined in the threaded portion.

Clause 18. The collet of clause 16, wherein the external part of the output shaft includes one or more grooves, and wherein each of the extension portions is configured to engage the one or more grooves to provide feedback to a user regarding securement of the tool accessory.

Clause 19. The collet of clause 18, wherein the feedback includes one or both of audible and tactile feedback.

Clause 20. The collet of clause 16, wherein the collet includes a sleeve coupled to the outer nut to at least partially enclose the spring.

Various features of the disclosure are set forth in the following claims.

## Claims

1. A collet for a tool, the collet comprising:
an outer nut including a grip and defining a collet bore configured to receive a chuck and having a collet engagement surface engageable with the chuck to selectively secure a tool accessory; and
a spring including an extension portion engageable with an external part of an output shaft of the tool or an internal part of the outer nut to provide feedback to a user regarding securement of the collet.

2. The collet of claim 1, wherein the collet bore includes a threaded portion configured to engage the output shaft.

3. The collet of claim 2, wherein the outer nut defines one or more apertures engageable by the spring.

4. The collet of claim 3, wherein the one or more apertures are defined in a threaded portion of the outer nut.

5. The collet of claim 1, wherein the outer nut includes one or more apertures and the spring includes a corresponding quantity of extension portions, and wherein the one or more apertures are defined in an unthreaded portion of the outer nut.

6. The collet of claim 1, wherein the feedback includes an audible or tactile feedback.

7. The collet of claim 1, wherein the extension portion is engageable with a groove of the output shaft on rotation of the outer nut.

8. The collet of claim 1, wherein the extension portion of the spring is engageable with two or more of a plurality of grooves of the output shaft on rotation of the outer nut.

9. The collet of claim 1, wherein the internal part of the outer nut includes one or more teeth annularly arranged in the outer nut.

10. The collet of claim 9, wherein the extension portion of the spring is configured to engage the one or more teeth of the outer nut to provide feedback to the user regarding securement of the collet.

11. The collet of claim 1, wherein the collet includes a sleeve coupled to the outer nut and at least partially enclosing the spring.

12. A tool comprising:
an output shaft coupled to the tool and including a threaded portion and a groove disposed in the output shaft;
an inner chuck; and
a collet selectively engageable with the output shaft, the collet including:
an outer nut defining a collet bore configured to receive the inner chuck and having a collet engagement surface engageable with an end of the inner chuck to selectively secure a tool accessory to the output shaft; and
a spring coupled to the outer nut and including an extension portion configured to engage the groove to provide feedback to a user regarding securement of the tool accessory on the output shaft.

13. The tool of claim 12, wherein the collet bore includes a threaded portion, and wherein the output shaft is configured to threadably engage with the threaded portion.

14. The tool of claim 13, wherein the outer nut defines one or more apertures engageable by the spring.

15. A collet configured to couple to an output shaft of a tool, the collet comprising:
an outer nut configured to engage the output shaft and defining apertures arranged annularly on the outer nut, the outer nut configured to selectively secure a tool accessory to the output shaft; and
a spring coupled to the outer nut and including extension portions, a first extension portion of the extension portions extending through a first aperture of the apertures and a second extension portion of the extension portions extending through a second aperture of the apertures to secure the spring to the outer nut for co-rotation, wherein each of the extension portions is configured to engage an external part of the output shaft.
